(19) Europäisches Patentamt
European Patent Office
Office européen des brevets

(11) Publication number: 0 301 831 A2

(12) # EUROPEAN PATENT APPLICATION

(21) Application number: 88306922.1

(51) Int. Cl.[4]: G 11 B 23/00

(22) Date of filing: 27.07.88

(30) Priority: 27.07.87 JP 187251/87
11.08.87 JP 200666/87
11.08.87 JP 200667/87

(43) Date of publication of application:
01.02.89 Bulletin 89/05

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100 (JP)

(72) Inventor: Kimura, Toshio
2 Yusyudai-higashi 3-chome
Ichihara-shi Chiba (JP)

Todo, Akira
5 Yusyudai-nishi 2-chome
Ichihara-shi Chiba (JP)

Minoda, Takeshi
5 Yusyudai-nishi 2-chome
Ichihara-shi Chiba (JP)

Kurisu, Masayoshi
4-1 Yusyudai-nishi 2-chome
Ichihara-shi Chiba (JP)

Masuda, Tetsuo
4 Yusyudai-nishi 2-chome
Ichihara-shi Chiba (JP)

Omae, Fujio
2 Yusyudai-higashi 3-chome
Ichihara-shi Chiba (JP)

(74) Representative: Myerscough, Philip Boyd et al
J.A.Kemp & Co. 14, South Square Gray's Inn
London, WC1R 5EU (GB)

(54) **Information recording discs and process for producing same.**

(57) An information recording disc (1) of an air sandwich structure which comprises two disc substrates (3a, 3b), at least one of which has a recording medium containing layer, laminated by ultrasonic welding to an outer peripheral spacer (5) and to an inner peripheral spacer (6), said outer and inner peripheral spacers (5, 6) lying respectively between the outer and inner peripheral portions of the two disc substrates (3a, 3b) and each having projections (7) on both surfaces thereof, wherein the projections (7) of at least one of the outer and inner peripheral spacers (5, 6) are arranged annularly but discontinuously.

EP 0 301 831 A2

**Description**

## INFORMATION RECORDING DISCS AND PROCESS FOR PRODUCING SAME

### FIELD OF THE INVENTION

This invention relates to information recording discs of an air sandwich structure which are useful for such purpose, for example, so optical discs, and to processes for producing the same.

### BACKGROUND OF THE INVENTION

There have been proposed information recording discs of an air sandwich structure made of plastics to perform storing and reading of information by converging rays of light such as laser beam and the like on recording medium containing layers thereof, said discs comprising two disc substrates laminated together by ultrasonic welding technique through outer and inner peripheral spacers interposed between said disc substrates (e.g. Japanese Patent Laid-Open Publn. No. 103537/1985).

The proposed information recording discs are those which are produced by a process wherein the outer and inner peripheral spacers, each having projections arranged annularly and continuously on both surfaces thereof are allowed to lie between the two disc substrates, and ultrasonic vibration is applied thereto by means of a ultrasonic welding machine to soften the projections of said outer and inner peripheral spacers, thereby welding the two disc substrates to adhere to each other at once. The information recording discs thus produced certainly have such advantages that the process for producing the same is simple and the rate of production is high in comparison with the case of information recording discs obtained by bonding two disc substrates with adhesives.

In the information recording discs as proposed above, however, there were involved such problems that because the projections of the outer and inner peripheral spacers are arranged annularly and continuously, internal strain remains on account of the ultrasonic welding and the disc surface warps, whereby no information recording discs having an angle of warp in conformity to the standard specification (within 5 mrad according to ISO are obtained.

In the process for producing information recording discs by effecting the ultrasonic welding at once, moreover, there were involved such problems that no information recording discs having an angle of warp in conformity to the standard specification as aforesaid are obtained, because shearing in positioning the disc substrates and outer and inner peripheral spacers tends to occur when ultrasonic vibration is applied thereto, particularly the outer peripheral spacer is markedly deformed by elastic after-effect on application thereto of the ultrasonic vibration and tends to protrude, or enter inwards, from the peripheral portion of disc substrates, and the positioning to obtain laminated discs in which the spacers are welding in position become difficult and at the same time, even when the spacers are welded in position between the disc substrates, warp takes place on the surface of the resulting disc laminated.

### OBJECT OF THE INVENTION

The present invention is intended to solve the above-mentioned problems, and a first object of the invention is to provide information recording discs which comprise laminated disc substrates and are less in warp, and a process for producing laminable information recording discs without causing shear in positioning spacers which are welded to between disc substrates.

A second object of the invention is to propose processes for producing information recording discs, said processes being capable of producing the information recording discs comprising a laminate of two disc substrates which are less liable to peel off from each other and found to be favorable from the standpoint of warp.

### SUMMARY OF THE INVENTION

The information recording disc according to the present invention is an information recording disc of an air sandwich structure, wherein two disc substrates, at least one of which has a recording medium containing layer, are laminated by ultrasonic welding technique to an outer peripheral spacer and to an inner peripheral spacer, said outer peripheral spacer lying between the outer peripheral portions of the two disc substrates and

said inner peripheral spacer lying between the inner peripheral portions of the two disc substrates, and said outer and innr peripheral individually having projections on both surfaces thereof, characterized in that the projections of at least one of the outer and inner peripheral spacers are arranged annularly but discontinuously.

A process according to the present invention is a process for producing an information recording disc of an air sandwich structure wherein two disc substrates, at least one of which has a recording medium containing layer, are laminated by ultrasonic welding technique to an outer peripheral spacer and to inner peripheral spacer, said outer peripheral spacer lying between the outer peripheral portions of the two disc substrates and said inner peripheral spacer lying between the inner peripheral portions of the two disc substrates, and said outer and inner peripheral individually having projections on both surfaces thereof, characterized by using said outer and inner peripheral spacers, the projections of at least one surface of which are arranged but discontinuously, ultrasonic welding the outer peripheral spacer to the disc substrate on one side, placing thereupon the disc substrate on the other side through the inner peripheral spacer, and simultaneously ultrasonic welding said outer peripheral spacer to said disc substrate on the other side, and said inner peripheral spacer to said disc substrate on both sides.

The another process according to the present invention is a process for producing information recording discs of an air sandwich structure, wherein spacers made of heat-fusible materials are allowed by lie between two disc substrates, at least one of which has a recording medium containing layer, and said disc substrates and said spacers are subjected to ultrasonic welding while applying pressure onto said spacers through said disc substrates by means of a pressuring means, which process is characterized in that said disc substrates and said spacers are allowed to soften or melt by oscillation of ultrasonic wave while applying pressure by means of said pressurizing means, after a first downstroke caused by means of said pressurizing means has reached the predetermined amount, the oscillation of ultrasonic wave is stopped to maintain the follow-up pressure condition caused by said pressurizing means until a second downstroke caused by said pressurizing means reaches the predetermined amount, and thereafter the application of pressure by means of said pressurizing means is stopped, whereby said disc substrates and said spacers are fusion bonded together.

## BRIEF DESCRIPTION OF THE DRAWINGS

Fig. 1 is a plain view showing the information recording disc of the present invention.

Fig. 2 is a sectional view at A-A of the disc shown in Fig.1.

Figs. 3 to 5 are plain views showing separate outer peripheral spacers, respectively.

Figs. 6 to 8 are plain views showing separate inner peripheral spacers, respectively.

Fig. 9 is a sectional view at B-B of the spacers shown in Figs. 3 to 8, respectively.

Figs. 10 and 11 are sectional views showing the states relative to a disc substrate and outer peripheral spacer, and to disc substrates and outer and inner peripheral spacers, under which they are welded together.

Fig. 12 is an enlarged view showing portion C of Fig. 10.

Fig. 13 is an enlarged view showing portion D of Fig. 11.

Fig. 14 is a front cross-sectional view of the ultrasonic welding machine used in the present invention, showing the whole structure thereof.

Fig. 15 is a diagram showing the relationship between time and amount of downstroke.

In the figures mentioned above, the same signs represent the same or corresponding portions, wherein 1 is an information recording disc, 3a and 3b are disc substrates, 4a and 4b are recording medium containing layers, 5 is an outer peripheral spacer, 6 is an inner peripheral spacer, 7 is a projection, 8 is a welded portion, 11 is an anvil, 14 is a horn, 16 is an ultrasonic wave oscillator, 17 is a fluid pressure cylinder, 18 is a gauge sensor, 19 is a contacting rod, and 20 is a control device.

## DETAILED DESCRIPTION OF THE INVENTION

An information recording disc according to the present invention and a process for producing the same will be fully described hereinafter.

Materials used for forming the disc substrate, outer peripheral spacer and inner peripheral spacer are thermoplastic resins such as polycarbonates, polymethyl methacrylates and polyolefins. Preferably useful resins are copolymers of ethylene and cycloolefins represented by the following general formula [I] or [II]. Preferred copolymers are those which contain 40-85 mol%, preferably 50-80 mol% of ethylene. Particularly preferred resins for forming the disc substrate include, for example, cycloolefin type random copolymer compositions formed from components.

(A) a cycloolefin type random copolymer comprising an ethylene component and a cycloolefin component derived from a cycloolefin represented by the following general formula [I] or [II], said copolymer having an intrinsic viscosity [η] of 0.05-10 dl/g as measured in decalin at 135° C and a softening temperature (TMA) of at

least 70°C, and

(B) a cycloolefin type random copolymer comprising an ethylene component and a cycloolefin component derived from a cycloolefin represented by the following general formula [I] or [II], said copolymer having an intrinsic viscosity [η] of 0.01-5 dl/g as measured in decalin at 135°C and a softening temperature (TMA) of less than 70°C, the weight ratio of said component (A)/component (B) being 100/0.1 to 100/10. Preferably, the component (A) contains 40-80 mol%, preferably 50-75 mol% of the ethylene component, and the component (B) contains 60-98 mol%, preferably 60-95 mol% of the ethylene component.

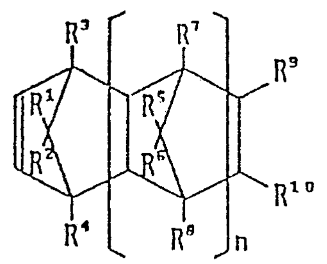

[I]

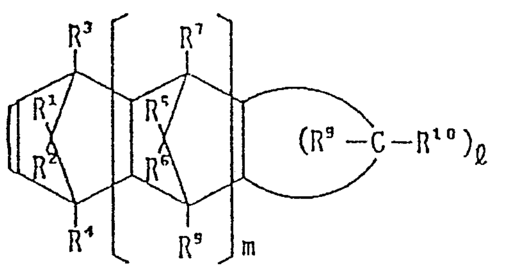

[II]

wherein n and m are each zero or a positive integer, $\ell$ is an integer of 3 or more, and $R^1$ to $R^{10}$ each represent hydrogen atom, halogen atom or hydrocarbon radical.

Of the resins illustrated above, those which are used for forming the disc substrates are preferably transparent. The resins used for forming the outer peripheral spacer are preferably those incorporated with 0.01-5% by weight of inorganic particles such as titanium oxide and silica having a particle diameter of less than 200μm. The resins used for forming the inner peripheral spacer may be those which are transparent or those which have been incorporated with fillers.

The disc substrate is molded into the form of a transparent disc. The outer peripheral spacer is molded into the form of a ring, and the inner peripheral spacer is moled into the form of a disc.

No particular limitation is placed upon the conditions under which ultrasonic welding is carried out. Generally speaking, however, the welding is performed by applying ultrasonic wave generated at an oscillation frequency of 15-50 KHz and a power of 0.5-5W to the adjacent parts to be joined under a pressure of 1-2 kg/cm$^2$. In that case, the spacers are allowed to soften or melt by oscillation of ultrasonic save while pressurizing said spacers through the disc substrates by means of the pressurizing means, and after the first downstroke has reached the predetermined amount by the action of the pressurizing means, the oscillation of ultrasonic wave is stopped to maintain for a given period of time the pressurized condition (follow-up pressure condition or dwell pressure condition), as it is and the pressurizing operation is stopped to terminate the ultrasonic welding operation after the second downstroke has reached the predetermined amount by the action of the pressurizing means, whereby an information recording disc is obtained as desired. Amount of the downstroke of the pressurizing means employed at the time of oscillation of ultrasonic wave (the amount of the first downstroke) and amount of the downstroke of the pressurizing means (the amount of second downstroke) vary depending upon the materials, shape and dimension of the disc substrate, outer and inner peripheral spacers employed, which are the parts to be joined together. Generally, however, the amount of the first downstroke is 30-200μm, and the sum of amounts of the first and second downstroke is about 60-250μm. The pressure to be applied is desirably the same pressure, though the pressure applied at the time of oscillation of ultrasonic wave may vary from that applied at the time of dwelling.

The term "information recording disc" as referred to in the present invention is intended to include all the media which record information on recording medium containing layers thereof, such as optical discs and flexible optical discs.

The processes for producing information recording discs of the present invention are preferably those which comprises subjecting the disc substrate on one side superposed on the outer peripheral spacer to a first stage welding by ultrasonic welding technique, and superposing the disc substrate on the other side through the inner peripheral spacer on the disc substrate turned inside out, to which the outer peripheral

spacer has been welded, and laminating the outer peripheral spacer to the disc substrate on the other side, and the inner peripheral spacer to the disc substrate on both sides by subjecting them to a second stage welding simultaneously from the same direction, thereby producing an information recording disc as desired. In that case, the amount of the down stroke of the pressurizing means can be controlled over two stages at the time when the welding is carried out either in one of the first and second stages or in both stages. Particularly, it is desirable to control the mount of the downstroke of the pressurizing means at the time when the second stage is carried out.

In the processes for the production of information recording discs according to the present invention, because the oscillation of ultrasonic wave is stopped to maintain the follow-up or dwell pressure condition, while maintaining the conditions under which all parts to be bonded are allowed to soften and melt under pressure by oscillation of ultrasonic wave, no ultrasonic wave vibration is transmitted to the melt parts at the time when they are going to solidify and consequently no internal strain is produced in the melt parts after solidification and no internal stress remains therein. Accordingly, the occurrence of warp on the disc substrates is inhibited, thereby favorable information recording discs are obtained and, moreover, the possibility of peeling the spacers and disc substrates from each other is also lessened.

Furthermore, in the process for producing an information recording disc of the present invention by welding the outer peripheral spacer to the disc substrate on one side in the first stage welding, the positioning of the outer peripheral spacer is easy and the shear in positioning at the time when ultrasonic welding is carried out is inhibited, and because other unwelded parts are welded at once in the second stage welding after the outer peripheral spacer has been welded to the disc substrate on one side in the first stage welding, residual strain is further lessened and the information recording disc obtained thereby is found to be more favorable from the standpoint of warp.

In the present invention, it is preferable that the outer and innr peripheral spacers lie individually between the outer and inner peripheral portions of the two disc substrates and individually have projections on both surfaces thereof, and the projections of at least one of the outer and inner peripheral spacers are arranged annularly but discontinuously.

The outer peripheral spacer used is in the form of ring, and the inner peripheral spacer used is in the form of disc, both being molded so that the projections formed on both surfaces thereof are arranged annularly but discontinuously. The projections are preferably in the shape of projection tapering off to a point, which are arranged annularly but discontinuously in a row or a plurality of rows without being arranged in the form of a perfectly continuous circle. Suitable projections for the purpose intended are in the form of arc, cone or bar.

The second process of the present invention by which the information recording discs of the invention are produced, involves a sequence of steps which comprises first welding by ultrasonic welding technique the outer peripheral spacer and the disc substrate on the other side together, then superposing the disc substrate on the other side through the inner peripheral spacer on the disc substrate to which the outer peripheral spacer has been welded, and finally laminating by the ultrasonic welding technique at once from one direction the outer peripheral spacer to the disc substrate on the other side, and the inner peripheral spacer so the disc substrates on both sides.

## EFFECT OF THE INVENTION

According to the present invention, information recording discs comprising laminated disc substrates, which are found to be favorable from the standpoint of warp and in which the possibility of pooling the laminated substrates from each other, can be obtained, because the process for producing the same is so designed that the parts to be joined are welded together by oscillation of ultrasonic wave under pressure, and thereafter the oscillation of ultrasonic wave is stopped under te follow-up or dwell pressure condition to solidify the parts thus welded.

The information recording disc produced by using the outer and inner peripheral spacers individually having projections on both surface thereof and the projections of at least one of the outer and inner peripheral spacers being arranged annularly but discontinuously, illustrated above are found to be less in internal strain that remains at the time of ultrasonic welding and also less in warp angle, because the projections of the outer and inner peripheral spacers, which form welded portions between the two disc substrates, are formed uniformly and arranged annularly but discontinuously.

In the second process for producing the information recording discs of the present invention, the positioning becomes easy, because the outer peripheral spacer which is liable to shear in positioning is welded to the disc substrate on one hand at the first stage of the process and hence the shear in positioning is inhibited at the time when the ultrasonic welding is effected. Furthermore, in the final stage of the present process, because the disc substrate on one side to which the outer peripheral spacer has been first welded and the disc substrate on the other side are laminated together in such a manner that the outer peripheral spacer is welded to the disc substrate on the other side and simultaneously the inner peripheral spacer is welded to the disc substrates on both sides, the internal strain produced at the time of the ultrasonic welding becomes smaller by far, and hence the information recording discs excellent in warpage characteristics are obtained.

## EMBODIMENT OF THE INVENTION

The present invention is illustrated below with reference to examples as expressed in terms of figures shown in the accompanying drawings. Fig. 1 is a plain view of the information recording disc as produced, Fig. 2 is a sectional view at A-A of the disc shown in Fig. 1, Figs. 3 to 5 are plain views showing separate outer peripheral spacers, respectively, Figs. 6 to 8 are plain views showing separate inner peripheral spacer, respectively, Fig. 9 is a sectional view at B-B of the spacers show in Figs. 3 to 8, respectively, Figs. 10 and 11 are sectional views showing the states relative to a disc substrate and outer peripheral spacer, and to disc substrate and outer and inner peripheral spacers, under which they are welded together, Fig. 12 is an enlarged view showing portion C of Fig. 10 and Fig. 13 is an enlarged view showing portion D shown in Fig. 11, Fig.14 is a front cross-sectional view of the ultrasonic welding machine used in the present invention, showing the whole structure thereof, and Fig. 15 is a diagram showing the relationship between time and amount of downstroke.

In Figs. 1 and 2, sign 1 indicates an information recording disc, and this information recording disc 1 comprises a laminated circular disc substrate having a center hole 2 in the center thereof. In the information recording disc 1, two disc substrates 3a and 3b are laminated together through an outer peripheral spacer 5 and an inner peripheral spacer 6 so that recording medium containing layers 4a and 4b face to each other, the two disc substrates 3a and 3b and then welded together by ultrasonic welding through projections provided on both surfaces of said spacers 5 and 6, respectively, and are joined to each other with weld portions 8 formed by transformation of said projections.

The outer peripheral spacer 5 is molded into the form of ring and, as shown in Fig. 9, a projection 7 tapering off to a point is provided on both surfaces thereof. In the example shown in Fig. 3, the projection 7 is molded into the form of short arc, and the short arcs are arranged in a row so as to assume a circular broken line shape. In the example shown in Fig.4, the projection 7 is molded into the form of long arc divided into four portions arranged along the circumference of the outer peripheral spacer 5. In the example shown in Fig. 5, the projection 7 is molded into the form of a perfectly continuous circle.

The inner peripheral spacer 6 is molded into the form of a disc having a center hole 2 in the center, and a projection 7 tapering off to a point is provided on both surface thereof. In the example shown in Fig. 6, the projection 7 is molded into the form of cone, and many projections 7 are arranged along the circumference to assume a circular dotted line shape in two rows. In the example shown in Fig. 7, the projection 7 is molded into the form of short arc, and the short arcs are arranged in a row so as to assume a circular broken line shape. In the example shown in Fig. 8, the projection 7 is molded into the form of a perfectly continued circle.

As shown in Figs. 10 to 14, respectively, sign 11 indicates an anvil (setting table) of a ultrasonic welding machine, and circular welding tables are provided on the outer and inner peripheries of the anvil, respectively. On the outer peripheral welding table, a positioning annular grooves 12 having the shape of the letter V is provided, and on the inner peripheral welding table, a positioning chuck of a rod-like shape is provided inside the central portion thereof. The positioning chuck 13 is divided radially into three portions and open in the radial direction so as to do the positioning. The positioning chuck 13 is inserted to a center hole 2 of the disc substrates and the inner spacer.

Sign 14 indicates a horn provided as a pressurizing means right above the anvil 11, said horn being connected through a converter 15 to a ultrasonic wave oscillator 16 and, at the same time, being so designed that it moves up and down relative to the anvil 11 by the action of a fluid pressure cylinder 17. Sign 18 indicates a gauge sensor being so designed that it is pressed by a connecting rod interlocking with the motion of the horn 14 to detect the amount of downstroke of the horn 14 and send a signal to a control device 20. The control device 20 is so designed that on the basis of a signal from the gauge sensor 18, it outputs a signal so as to drive or stop the action of the ultrasonic wave oscillator 16 and fluid pressure cylinder 17.

In the process for producing the information recording disc 1, as shown in Figs. 10 and 12, the outer peripheral spacer 5 is first set on the anvil 11 by positioning, while inserting the projection 7 into the positioning groove 12 of the anvil 11 of the ultrasonic welding machine. The disc substrate 3a is superposed on the outer peripheral spacer 5 thus set on the anvil. The disc substrate 3a is positioned and held by inserting the positioning chuck 13 into the center hole 2 provided in the center of the disc substrate. The positioning chuck 13 then radially opens the radially divided three portions thereof in the radial direction to execute its positioning and chucking actions.

Under this condition as illustrated above, the horn 14 connected to the ultrasonic wave oscillator 16 is allowed to descend by the fluid pressure cylinder 17 to apply pressure to the disc substrate 3a and outer peripheral spacer 5 present between the horn 14 and anvil 11. At the time when the application of pressure is initiated, the ultrasonic wave oscillator is driven to transmit ultrasonic wave vibration from the horn 14 through the converter 15 to the disc substrate 3a and outer peripheral spacer 5. By the virtue of this operation, the projections 7 on the upper side of the outer peripheral spacer 5 and corresponding portion of the disc substrate 3a soften and melt to be joined together, whereby weld portions 8 are formed as shown in Figs. 2 and 13 respectively. The control means to be employed in the above case will be mentioned later.

Subsequently, as shown in Figs. 11 and 13, the horn 14 is pushed back upward and the disc substrates 3a to which the outer peripheral spacer 5 has been welded is turned inside out, and the outer disc substrate 3b is set

by superposing it through the inner peripheral spacer 6 on the disc substrate 3a thus turned inside out on the anvil 11. The outer peripheral spacer and disc substrate 3b are positioned and held by inserting the positioning chuck 13 into the center hole 2. The horn 14 is again allowed to descend to transmit ultrasonic wave vibration under pressure to these parts thus set on the anvil 11, unwelded projections 7 of the outer peripheral spacer 5 and the corresponding portion of the disc substrate 3b, and the projections of the inner peripheral spacer 6 and corresponding portions of the disc substrates 3a and 3b are soften and melted to form by welding at once weld portions 8 as shown in Fig. 2, whereby the information recording disc 1 is produced.

In the above-illustrated process, the amount of downstroke of the horn 14 is controlled over two stages, that is, at the time when ultrasonic welding is executed in the first stage where the outer peripheral spacer 5 and disc substrate 3a are fusion bonded together and at the time ultrasonic welding is executed in the second stage where the remaining fusion bonding is executed. In that case, when the contacting rod 19 pushes the gauge sensor 18 as the horn 14 descends, said gauge sensor detects the position of the horn 14. When, prior to the fusion bonding, the horn 14 is allowed to first descend by the action of the fluid pressure cylinder 17, the gauge sensor 18 detects this motion, but the fluid pressure cylinder 17 continues to decend under a definite pressure by the instruction from the control device 29 during the period of time until the horn 14 is brought into contact with the disc substrate 3a on the anvil 11. When the horn 14 is in contact with the disc substrate 3a on the anvil 11 and placed under pressurized condition, the horn 14 ceases to decend, and hence the gauge sensor 18 detects this point of decent as a zero (0) point of the amount of downstroke shown in Fig. 15 and sends a signal to this effect to the control device 20. Upon receipt of this signal, the control device 20 gives an instruction to the ultrasonic wave oscillator 16 to oscillate ultrasonic wave. When the parts to be welded soften and melt by the above-mentioned operation, the horn 14 resumes its descent, because it is under a definite pressure. In this case, the gauge sensor 18 detects the amounts of downstroke of the horn 14, and at the time when the detected amount of downstroke of the horn 14 reaches S set as the amount of the first downstroke in Fig. 15, the ultrasonic wave oscillator 16 ceases to operate by the instruction from the control device 20. Because the fluid pressure cylinder continues its application of pressure, a dwell pressure condition is brought about in a state where the oscillation of ultrasonic wave is stopped, and the horn 14 decends up to amount of second downstroke until the weld portions 8 solidify. When the gauge sensor 18 detects the total sum the amount T of the first and second downstrokes, the application of pressure by the fluid pressure cylinder 17 ceases by the instruction from the control device 20, whereby the ultrasonic welding is over.

In the process illustrated above, because the dwell pressure condition is maintained by stopping the oscillation of ultrasonic wave in a state where the parts to be welded are softened and melted by ultrasonic wave oscillated, the pressurized condition is maintained in a state where no ultrasonic wave vibration is transmitted to the weld portions 8 at the time when said weld portions are going to solidify, and consequently no internal stress remains in the weld portions 8, whereby the information recording disc 1 obtained is found to be favorable from the standpoint of warp.

When the outer peripheral spacer 5 is welded to the disc substrate 3a on one side in the first stage, the positioning of the outer peripheral spacer 5 is easy and shear in the positioning at the time of ultrasonic welding is inhibited, and because the other unwelded parts are welded together at once in the second stage where the outer peripheral spacer 5 has been welded to the disc substrate 3a on one hand, the residual strain is further lessened, whereby the information recording disc 1 obtained is found to be more favorable with respect to warp.

Test examples of the present information recording discs are set forth hereinafter.

The information recording discs 1 were produced by ultrasonic welding according to the above-mentioned process by using the disc substrates 3a and 3b, 130 mm in diameter and 1.2 mm in thickness, molded from an ethylene/tetracyclododecene copolymer (the ethylene content 62 mol%), the outer peripheral spacer 5 shown in Fig. 3, 130 mm in outside diameter, 125 mm in inside diameter and about 0.4 mm in thickness but excluding a thickness of the projection 7, molded from a resin composition comprising an ethylene/tetracyclododecene copolymer (the ethylene content 72 mol%) incorporated with 0.3% by weight of titanium oxide, and the inner peripheral spacer shown in Fig. 6, 36 mm in outside diameter, 15 mm in inside diameter, and about 0.4 mm in thickness but excluding a thickness of the projection 7, and employing the amount of downstroke as shown in Table 1. The discs 1 thus produced were measured for amount of warp (W) (the maximum value of angle of warp of the disc substrate 3a + the maximum value of angle of warp of the disc substrate 3b)/2, and subjected repeatedly to drop test from a height of 1 m to determine the number of times of drop at which the peeling occurred in the welded portion of the inner or outer periphery of the discs 1. The results obtained are shown in Table 1.

The amount of downstroke shown in Table 1 represents an amount of downstroke employed in the second stage where an overall ultrasonic welding has been done. Furthermore, the amount of warp was expressed in terms of the following indices of evaluation. In this connection, the information recording discs which can be put to practical use without marring their performance are those having the evaluation indices F and G.

A: $W > 10$m radian
B: $10 \geqq W > 8.75$m radian
C: $8.75 \geqq W > 7.5$m radian
D: $7.5 \geqq W > 6.25$m radian
E: $6.25 \geqq W > 5$m radian
F: $5 \geqq W > 3.5$m radian

G: W≦3.75m radian

Information recording discs were prepared in comparative examples carried out in the same manner as mentioned above except that only the amount of downstroke was controlled at the time when ultrasonic wave is oscillated, and the ultrasonic welding was carried out without maintaining the dwell pressure condition. The results obtained are also shown in Table 1.

Table 1

| | Amount of downstroke (μm) | | Amount of warp | Drop test Number of times |
|---|---|---|---|---|
| | 1st (oscillation) | 1st + 2nd (dwelling) | | |
| Example 1 | 30 | 60 | G | 7 |
| 2 | 40 | 80 | G | 8 |
| 3 | 50 | 100 | F | >10 |
| 4 | 80 | 110 | G | >10 |
| 5 | 90 | 110 | G | >10 |
| Comp.Ex.1 | 40 | — | E | 0 |
| 2 | 50 | — | F | 0 |
| 3 | 80 | — | D | 2 |

From the results shown in Table 1, it is understood that in the process of the present examples where the amount of downstroke is controlled in two stages, the information recording discs obtained are found to be favorable from the standpoint of warp and also less in peeling when subjected to drop test, whereas in the process of the comparative examples, the information recording discs obtained are found to be large in amount of warp and liable to peel off.

In the another process for producing the above-mentioned information recording disc 1 of the present invention, the outer peripheral spacer 5 is first set on an anvil (a setting stand) 12 of a ultrasonic welding machine by inserting the projections 7 of the outer peripheral spacer 5 into a positioning groove 12 of the anvil 11 as shown in Figs. 10 and 12. The disc substrate 3a is then superposed on the outer peripheral spacer 5 as set above, and a positioning chuck 13 is inserted into the center hole 2 provided in the center of the disc substrate 3a, thereby positioning and holding the disc substate 3a on the outer peripheral spacer 5.

Under such conditions as illustrated above, a horn 14 connected to a ultrasonic wave oscillator is allowed to descend by the action of a fluid pressure cylinder onto the disc substrate 3a and thereby to apply ultrasonic wave vibration thereto under pressure, whereupon the projections 7 of the upper side of the outer peripheral spacer 5 and the portions of the disc substrate 3a corresponding thereto are often and welded to each other, thereby forming a welded portion 8 as shown in Figs. 2 and 13.

Subsequently, the disc substrate 3a to which the outer peripheral spacer 5 has been welded is turn inside out on the anvil 11 and thereon is superposed through the inner spacer the other disc substrate 3b as shown in Figs. 11 and 13. The resulting assembly is then positioned and held by inserting the positioning chuck 13 into the center hole 2. The horn 14 is again allowed to descend upto the assembly to apply ultrasonic wave vibration under pressure thereto, whereby unwelded projections 7 of the outer peripheral spacer 5 and the corresponding portion of the disc substrate 3b, and the projections 7 of both sides of the inner peripheral spacer 6 and the corresponding portions of both the disc substrates 3a and 3b often and weld together at once to form the unwelded portions 8 as shown in Fig. 2. Thus, the information recording disc 1 is produced.

The information recording disc 1 thus produced is found to be small in angle of warp of the disc 1 as a whole, because the projections 7 of the outer peripheral spacer 5 and inner peripheral spacer 6, which become the

welded portions 8, are molded discontinuously, internal strain becomes less, said internal strain being produced by the action of the ultrasonic welding and remaining in the vicinity of the welded portions 8.

According to the another process for producing the information recording discs of the present invention as illustrated above, the positioning is easy and also shear in positioning which occurs at the time of ultrasonic welding is inhibited, because the outer peripheral spacer 5 which is liable to shear in positioning is welded to the disc substrate 3a on one side in a first stage of the process as illustrated previously. Further, there is obtained the information recording disc 1, which is found to be favorable from the standpoint of warp, because under the conditions where the outer peripheral spacer 5 has been welded to the disc substrate 3a on one side, all other unwelded portions are welded to one another at once and hence residual strain becomes less.

In the present invention, it is desirable that the projections 7 are arranged annularly but discontinuously on both surfaces of the outer peripheral spacer 5 and inner peripheral spacer 6, though the projections 7 may be arranged likewise either on both surfaces of the outer peripheral spacer 5 or inner peripheral spacer 6. In such cases, the outer peripheral spacer 5 shown in Fig. 3 is preferable to that shown in Fig. 4, and the inner peripheral spacer 6 shown in Fig. 6 is preferable to that shown in Fig. 7.

Besides the process for producing the information recording disc 1, which comprises effecting the two-stage ultrasonic welding as illustrated previously, there is another process which involves the three-stage ultrasonic welding, wherein the disc substrate 3a on one side is welded to the outer peripheral spacer 5, thereafter the disc substrate 3b is superposed thereon through the inner peripheral spacer 6 lying there between, both disc substrates 3a and 3b are individually welded to the inner peripheral spacer 6, and then the disc substrate 3b on the other side is welded to the outer peripheral spacer 5. However, the above-mentioned process involving the two-stage ultrasonic welding is preferable to this three-stage process, because the information recording disc 1 which is found to be more favorable from the standpoint of warp is obtained by the former process.

The present invention is further illustrated below with reference to examples and comparative examples.

The information recording discs 1 were produced according to the above-mentioned processes by using the disc substrates 3a and 3b, 130 mm in diameter and 1.2 mm in thickness, molded from an ethylene/tetracyclododecene copolymer (the ethylene content 62 mol%), the outer peripheral spacers 5 respectively shown in Figs. 3 to 5, 130 mm in outside diameter, 125 mm in inside diameter, and about 0.4 mm in thickness but excluding a thickness of the projections 7, molded from a resin composition comprising an ethylene/tetracyclododecene (the ethylene content 72 mol%) incorporated with 0.3% by weight of titanium oxide, and the inner peripheral spacers 5 shown in Figs. 6 to 8, 36 mm in outside diameter, 15 mm in inside diameter, and about 0.4 mm in thickness but excluding a thickness of the projections 7, molded from an ethylene/tetracyclododecene copolymer (the ethylene content 72 mol%). The discs 1 thus produced were measured for amount of warp as described above. The results obtained are shown in Table 2.

In Comparative Example 4, the outer peripheral spacer 5 and inner peripheral spacer 6 used were those in which the projections 7 had been arranged annularly and continuously, in comparative Example 5 the disc substrates 3a and 3b, the outer peripheral spacer 5 and inner peripheral spacer 6 were welded to one another at once, and in Comparative Example 6 the disc substrate 3a and the outer peripheral spacer 5, the disc substrates 3a and 3b and the inner peripheral spacer 6, and the disc substrate 3b and the outer peripheral spacer 5 are individually welded to each other in the consecutive three-stage ultrasonic welding. The results obtained are shown in Table 2.

Table 2

| | Welding process | Welding time (sec) | Fig. No. of outer peripheral spacer | Fig. No. of outer peripheral spacer | Amount of warp |
|---|---|---|---|---|---|
| Example | | | | | |
| 6 | 2-stage | 10 | Fig. 3 | Fig. 6 | G |
| 7 | 2-stage | 10 | Fig. 3 | Fig. 7 | G |
| 8 | 2-stage | 10 | Fig. 4 | Fig. 6 | G |
| 9 | 2-stage | 10 | Fig. 4 | Fig. 7 | F |
| 10 | 2-stage | 10 | Fig. 4 | Fig. 8 | F |
| Compar. Example | | | | | |
| 4 | 2-stage | 10 | Fig. 5 | Fig. 8 | E |
| 5 | 1-stage | 5 | Fig. 5 | Fig. 8 | (outer peripheral spacer was disconnected.) |
| 6 | 3-stage | 15 | Fig. 5 | Fig. 8 | E |

From the results shown in Table 2, it is understood that in the examples where the projections 7 of either the outer peripheral spacer 5 or inner peripheral space 6 have been arranged annularly but discontinuously, no shearing of the spacers occurs and the information recording discs obtained thereby are all found to be favorable from the standpoint of warp, whereas in the comparative examples where the projections 7 have been arranged annularly and continuously on both the outer peripheral spacer 6 and inner peripheral spacer 6, the information recording discs obtained thereby are found to have a large amount of warp.

## Claims

1. An information recording disc of an air sandwich structure, wherein two disc substrates, at least one of which has a recording medium containing layer, are laminated by ultrasonic welding to an outer peripheral spacer and to an inner peripheral spacer, said outer peripheral spacer lying between the outer peripheral portions of the two disc substrates and said inner peripheral spacer lying between the inner peripheral portions of the two disc substrates, and said outer and inner peripheral spacers each having projections on both surfaces thereof, the projections of at least one of the outer and inner peripheral spacers being arranged annularly but discontinuously.

2. An information recording disc according to claim 1 wherein said projections are of arc, cone or bar form.

3. An information recording disc according to claim 1 or 2 wherein said projections are arranged annularly but discontinuously in a row or a plurality of rows.

4. A process for producing an information recording disc as claimed in claim 1, 2 or 3, which process comprises ultrasonically welding the outer peripheral spacer to a first of said two disc substrates to provide an initial assembly, placing upon the initial assembly the second disc substrate and the inner peripheral spacer, and simultaneously ultrasonically welding said outer peripheral spacer to said second disc substrate, and said inner peripheral spacer to said first and second disc substrates.

5. A process according to claim 4 wherein the disc substrates and the outer and inner peripheral spacers are chucked by a positioning chuck which is divided radially and open in the radial direction, said positioning chuck being inserted through a center hole in the disc substrates and the inner spacer.

6. A process for producing an information recording disc of an air sandwich structure, wherein two disc substrates, at least one of which has a recording medium containing layer, are laminated by ultrasonic welding through spacers composed of heat fusible material present therebetween while applying pressure to said spacers through said disc substrates by means of a pressuring means, characterized in that the spacers are softened or melted ultrasonically while applying pressure to said disc substrates and spacers by said pressurizing means, the ultrasound is stopped after a first downstroke of predetermined magnitude by the pressuring means, a dwell pressure condition is maintained by the pressurizing means until a second downstroke of predetermined magnitude by the pressuring means, and the application of pressure by the pressuring means is ceased.

7. A process according to claim 6 wherein the spacers have projections on both surfaces thereof.

8. A process according to claim 6 or 7 wherein completion of said first and second downstrokes is determined by detecting the distance between the two disc substrates.

9. A process according to claim 6, 7 or 8 wherein the disc substrates and the outer and inner peripheral spacers are chucked by a positioning chuck which is divided radially and open in the radial direction, said positioning chuck being inserted through a center hole in the disc substrates and the inner spacer.

0301831

FIG. 1

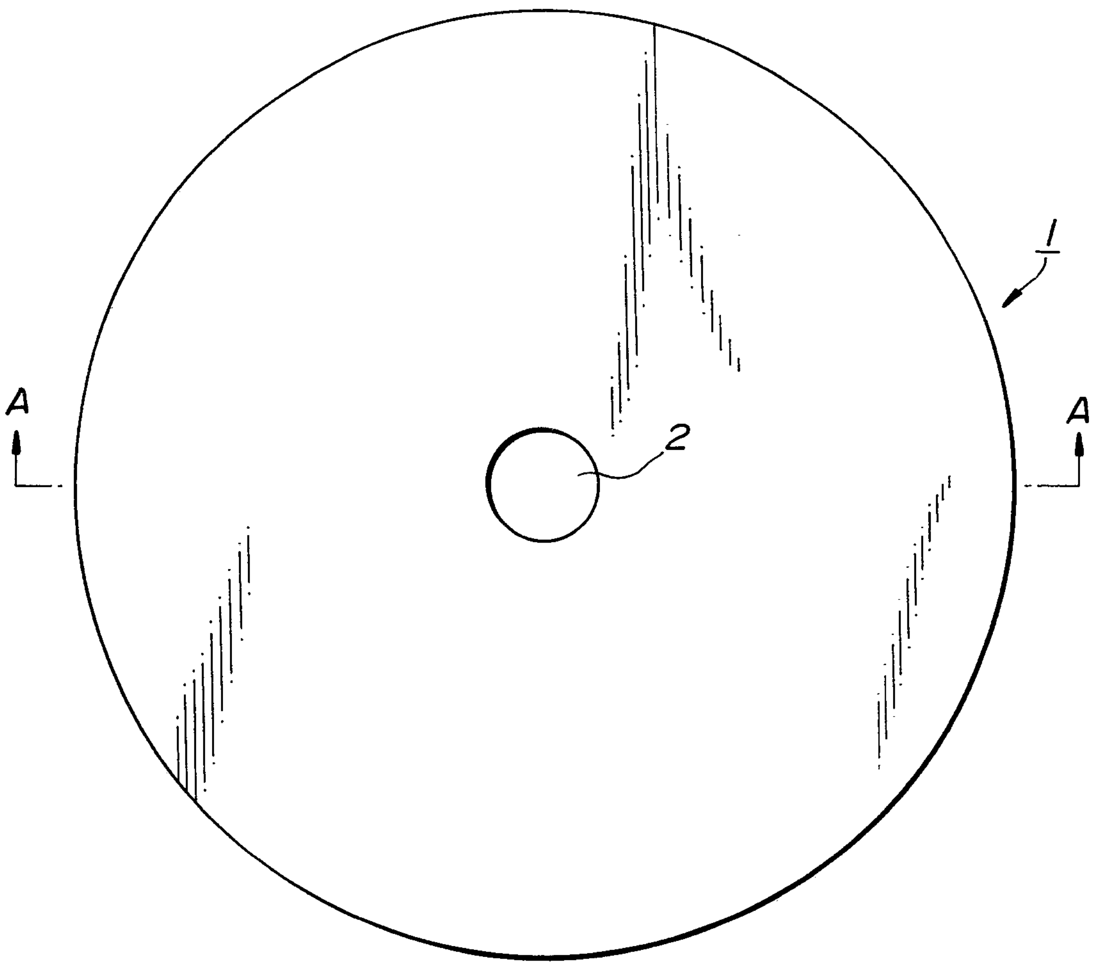


FIG. 2

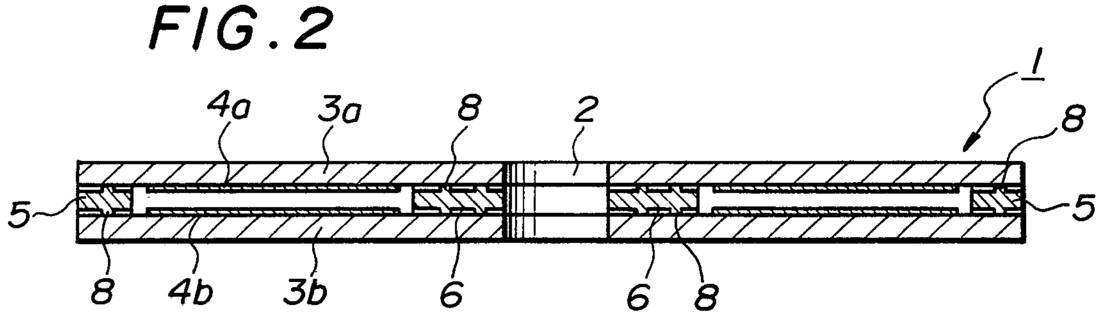

FIG. 3

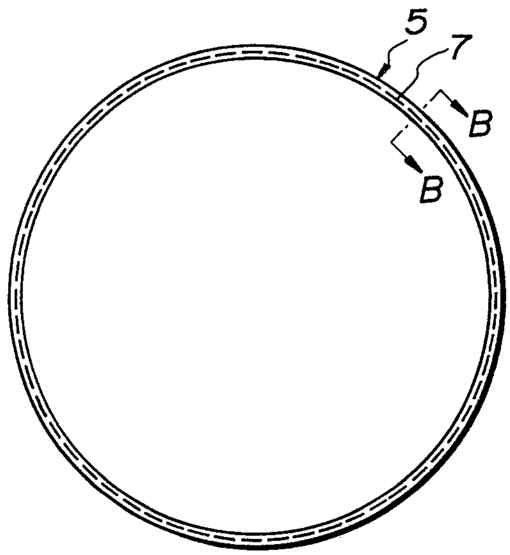


FIG. 6

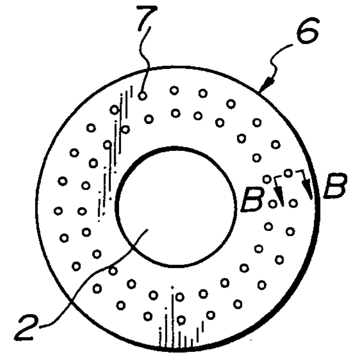


FIG. 7

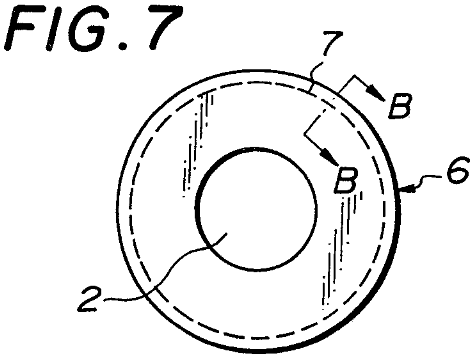


FIG. 4

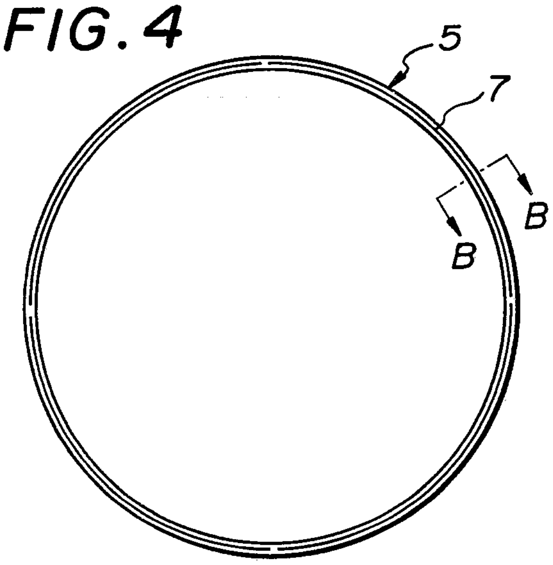


FIG. 8

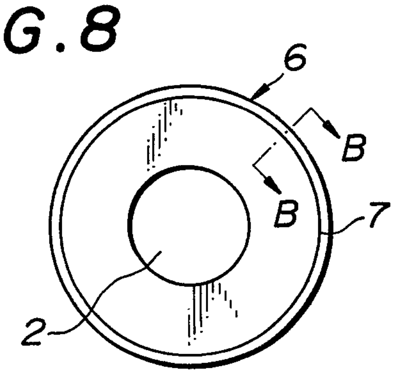


FIG. 5

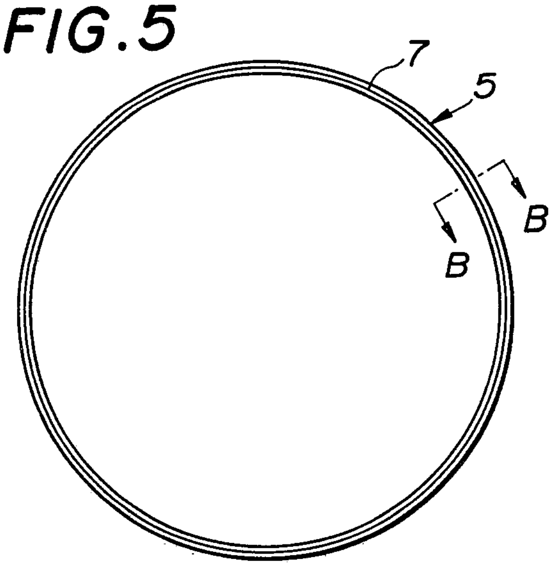


FIG. 9

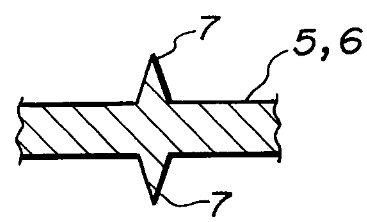

0301831

FIG.10

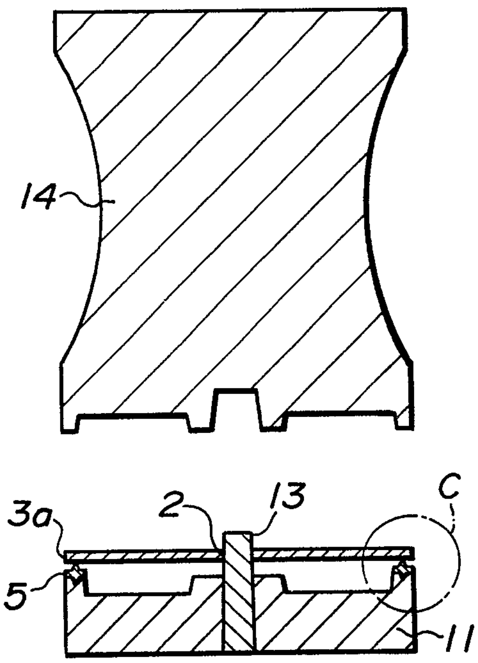


FIG.11

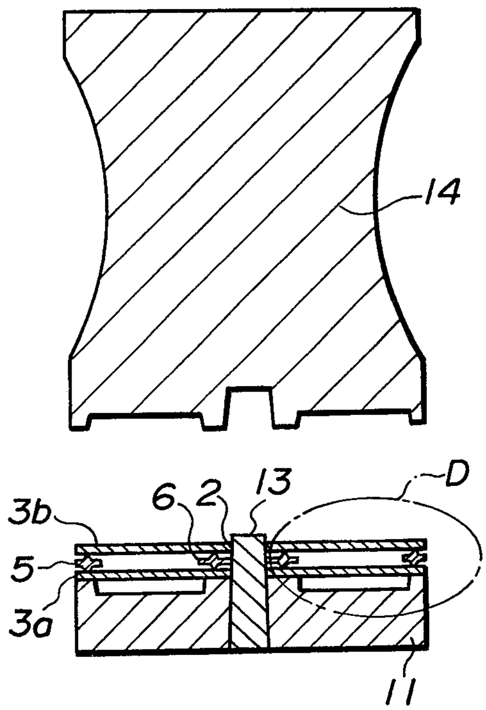


FIG.12

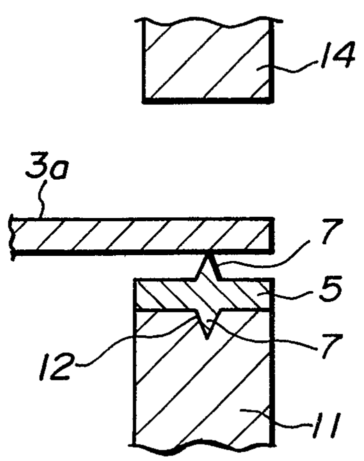


FIG.13

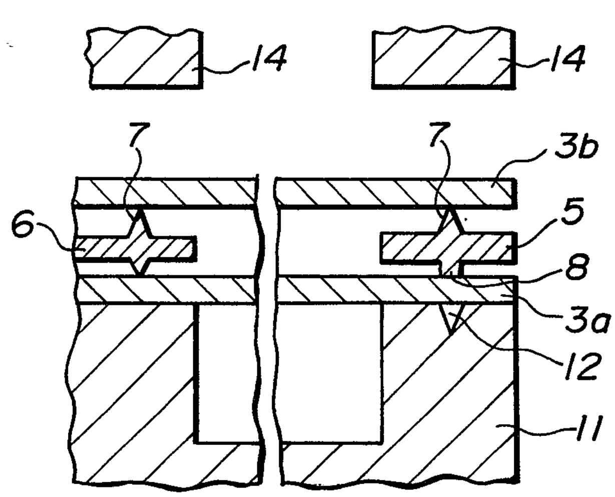

FIG. 14

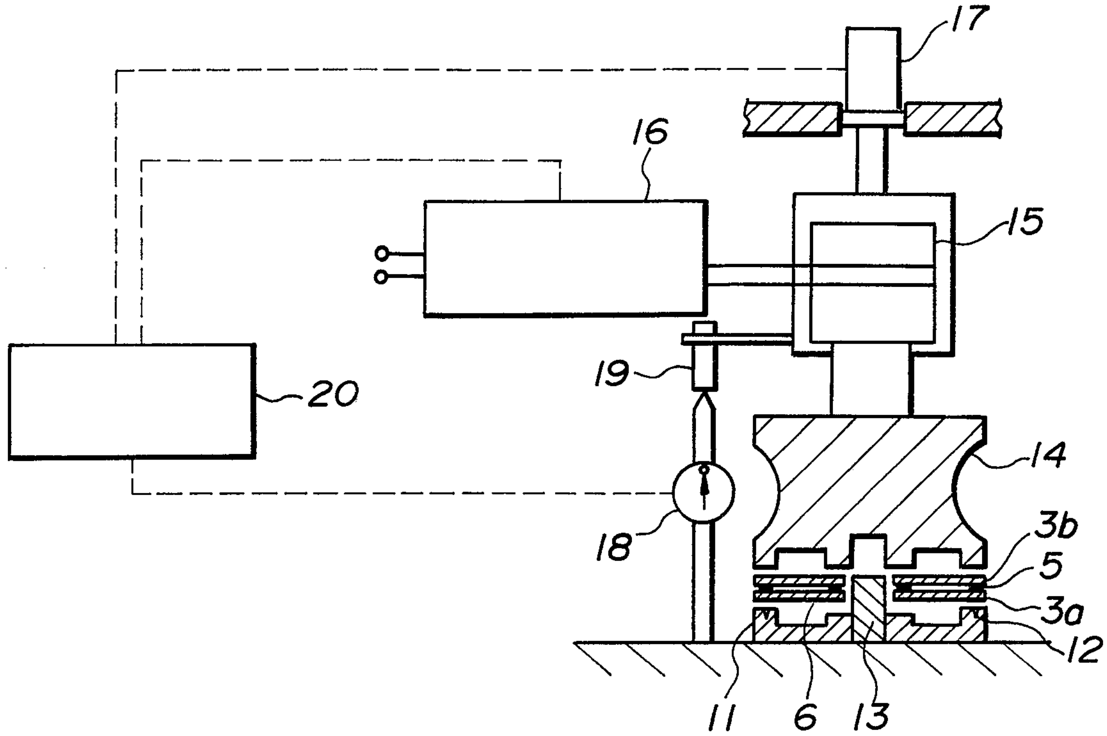
17
16
15
20
19
14
18
3b
5
3a
12
11
6
13

FIG. 15

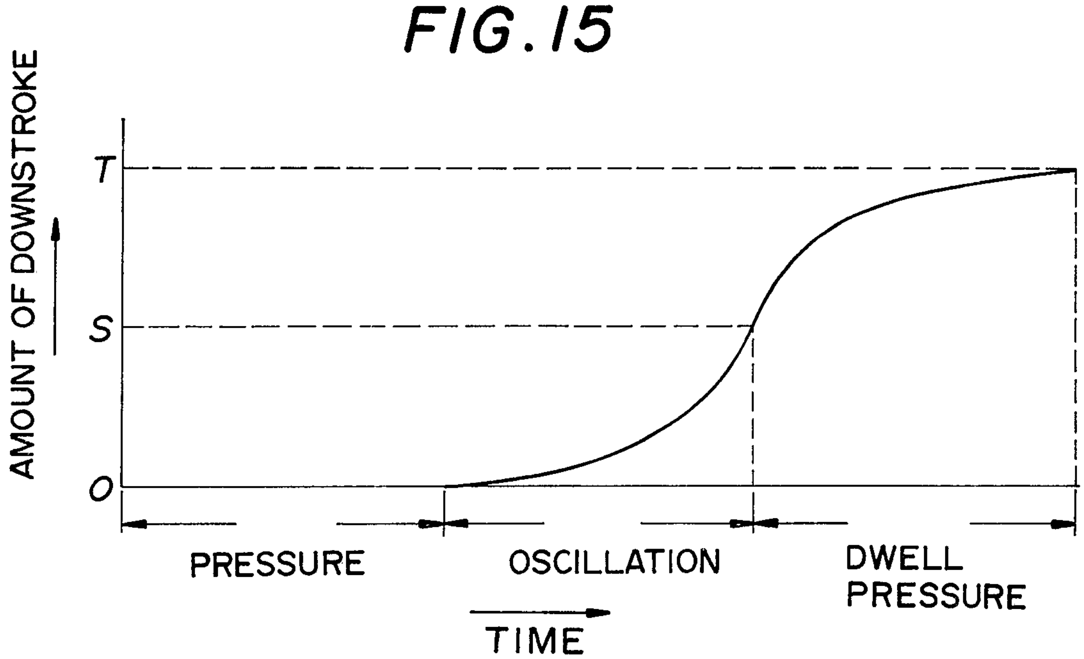
AMOUNT OF DOWNSTROKE
T
S
O
PRESSURE
OSCILLATION
DWELL PRESSURE
TIME